# EUROPÄISCHE PATENTANMELDUNG

(11) **EP 0 919 784 A2**
(43) Veröffentlichungstag der Anmeldung: **02.06.1999**
(21) Anmeldenummer: 98122269.8
(22) Anmeldetag: 24.11.1998
(51) Int. Cl.: G01B 11/24

(54) **Vorrichtung zur Bestimmung von dreidimensionalen Daten von Objekten**

(30) Priorität: 01.12.1997 DE 19753246
(71) Anmelder: Seifert, Roland, 61440 Oberursel (DE)
(72) Erfinder: Seifert, Roland, 61440 Oberursel (DE)
(74) Vertreter: Rassler, Andrea, Dipl.-Phys.

(57) **Zusammenfassung**

Die Erfindung betrifft eine Vorrichtung zur Gewinnung von dreidimensionalen Daten von Objekten, bei welcher eine Codiereinrichtung eine das Objekt beleuchtende Einrichtung ansteuert, die ein der Codierung entsprechendes optisches Muster auf das Objekt projiziert, wobei eine Bildaufnahmeeinrichtung das mit dem Muster beleuchtete Objekt aufnimmt und eine Auswerteeinrichtung die von der Bildaufnahmeeinrichtung aufgenommenen Bildpunkte durch ein aktives Triangulationsprinzip in eine dreidimensionale Darstellung des Objektes umsetzt.

Bei einer Vorrichtung, welche einfach und kostengünstig herstellbar ist und die die gleiche Qualität der Aufnahmen erzeugt wie teure Spezialgeräte, weist die das Objekt beleuchtende Einrichtung (3) eine Vielzahl einzeln ansteuerbarer Projektionspunkte auf, die von der Codiereinrichtung (1) einzeln angesteuert werden, wodurch die angesteuerten Projektionspunkte auf dem Objekt (4) das optische Muster erzeugen.

## Beschreibung

Die Erfindung betrifft eine Vorrichtung zur Gewinnung von dreidimensionalen Daten von Objekten, bei welcher eine Codiereinrichtung eine das Objekt beleuchtende Einrichtung ansteuert, die ein der Codierung entsprechendes optischen Muster auf das Objekt projiziert, wobei eine Bildaufnahmeeinrichtung das mit dem Muster beleuchtete Objekt aufnimmt und eine Auswerteeinrichtung die von der Bildaufnahmeeinrichtung aufgenommenen Bildpunkte durch ein aktives Triangulationsprinzip in eine dreidimensionale Darstellung des Objektes umsetzt.

Aus der DE 41 16 445 A1 ist eine Vorrichtung zum Aufnehmen eines dreidimensionalen Bildes eines Objektes nach dem aktiven Triangulationsprinzip bekannt, welche eine Videokamera und einen Laserprojektor aufweist.

Der Laserprojektor besitzt eine Codier- und Speichereinrichtung sowie eine Optik, die auf das aufzunehmende Objekt einen Code zur optisch - flächenhaften Objektmarkierung in Form von Lichtschnittebenen projiziert. Die Videokamera nimmt bei der Aufnahme des Objektes die Objektmarkierungen mit auf.
Der von der Codiereinrichtung erzeugte Code ist frei programmierbar und besitzt Anteile zum Steuern der Intensität des Lasers, einer Fokus - Verstelleinrichtung und einer Ablenkeinrichtung für den Laserstrahl.

Der Code wird synchron der Videokamera zur Verfügung gestellt, wobei die Grauwerte der Bildfolge an derselben Bildkoordinate vom Dekodierer als Codewort erkannt und einer bestimmten Lichtschnittebene im Kontinuum der projizierten Lichtschnittebenen zugeordnet werden, die die absoluten Koordinaten des betrachteten Objektpunktes liefern.

Bei solchen Laserprojektoren handelt es sich um Geräte, die speziell für den Einsatz in Vorrichtungen zur Bestimmung von dreidimensionalen Daten von Objekten hergestellt werden. Da gleichzeitig die Intensität des Lasers sowie die Brennweite und die Ablenkung des Laserstrahls des Laserprojektors gesteuert werden sollen, enthalt der Laserprojektor eine speziell diesem Anwendungsfall angepaßte Codiereinrichtung zur Ansteuerung des Laserprojektors.

Sollen solche Laserprojektoren von gebräuchlichen Computern angesteuert werden, so setzt das eine spezielle Ausgabeelektronik im Computer voraus, um die zu projizierenden Muster schnell zu laden und /oder auszugeben.

Der Erfindung liegt somit die Aufgabe zugrunde, eine Vorrichtung zur Aufnahme von dreidimensionalen Daten von Objekten anzugeben, die einfach und kostengünstig herstellbar ist und die gleiche Qualität der Aufnahmen erzeugt wie teure Spezialgeräte.

Erfindungsgemäß wird die Aufgabe dadurch gelöst, daß die das Objekt beleuchtende Einrichtung eine Vielzahl von Projektionspunkten aufweist, die von der Codiereinrichtung einzeln angesteuert werden, wodurch die angesteuerten Projektionspunkte auf dem Objekt das optische Muster erzeugen.

Der Vorteil der Erfindung besteht darin, daß ohne großen gerätetechnischen Aufwand lediglich durch zeitgleiche Ansteuerung der einzelnen Projektionspunkte durch die Codiereinrichtung ein örtlich in Form, Farbe und Intensität beliebiges Muster durch die das Objekt beleuchtenden Einrichtung auf der Oberfläche des Objektes erzeugbar ist. Da das Muster sofort vollständig projiziert werden kann, wird eine Meßzeitverkürzung gegenüber der Laseranwendung erreicht, wo das Muster durch einen Nacheinanderaufbau der einzelnen Linien erzeugt werden muß.

In einer Ausgestaltung wird das von der Codiereinrichtung erzeugte Muster parallel zu den von der das Objekt beleuchtenden Einrichtung ausgegebenen Zeilen erzeugt, wodurch Ungenauigkeiten durch Bildpunktverschiebungen unterbunden werden.
Weiterhin kann auf eine sonst übliche Pixeltaktsynchronisation zwischen Bildaufnahmeeinrichtung und Bildspeicher verzichtet werden, da sowohl die das Objekt beleuchtende Einrichtung als auch die Bildaufnahmeeinrichtung zeilenorientiert arbeiten.

Bei der Verwendung eines sinusförmigen Streifenmusters steuert die Codiereinrichtung die das Objekt beleuchtende Einrichtung über einen Verstärker mit einer Filtercharakteristik an, wodurch einfach eine Verbesserung der sinusförmigen Kurvenform des Ansteuersignals erreicht wird.

In einer Ausgestaltung ist die Codiereinrichtung ein Computer, dessen zur Ansteuerung eines Monitors vorgesehenes Bildausgabesignal zu einer der von ihm erzeugten Codierung entsprechenden Ansteuerung der Projektionspunkte der das Objekt beleuchtenden Einrichtung genutzt wird.
Eine solche Einrichtung zur Aufnahme von dreidimensionalen Daten eines Objektes läßt sich einfach und kostengünstig aus Standardkomponenten der PC- und Videotechnik aufbauen.
Mit Hilfe des an sich aus der Computertechnik bekannten Video - Graphik - Signals ist eine sehr schnelle Erzeugung und Ausgabe des Musters möglich. Sonst übliche spezielle Ausgabeelektroniken für die Codiereinrichtung sind nicht erforderlich.

Zur gleichzeitigen Beobachtung des mit dem Muster beleuchteten Objektes wird parallel zu der das Objekt beleuchtenden Einrichtung eine Anzeigeeinheit mit dem Bildausgabesignal angesteuert.

In einer einfachen Ausgestaltung sind die das Objekt beleuchtende Einrichtung, die Bildaufnahmeeinrichtung sowie das Objekt selbst unbeweglich in einem starren Meßraum angeordnet.
Eine solche Einrichtung verzichtet vollkommen auf bewegte Teile. Die Meßdauer wird nur durch die Bildaufnahmegeschwindigkeit der Bildaufnahmeeinrichtung begrenzt und nicht durch mechanische Bewegungen einzelner Elemente der Meßvorrichtung beeinträchtigt. Diese Einrichtung eignet sich besonders zur schnellen 3D-Aufnahme von lebenden Objekten.

In einer Ausgestaltung sind die Bildaufnahmeeinrichtung und die das Objekt beleuchtende Einrichtung annähernd in einer gemeinsamen Ebene angeordnet.

Alternativ dazu ist die das Objekt beleuchtende Einrichtung auf einer ersten horizontalen Ebene und die Bildaufnahmeeinrichtung auf einer zweiten horizontalen Ebene angeordnet.

Um größere Objekte, wie z.B. einen Menschen zu vermessen, sind in dem Meßraum, der nur unwesentlich höher ist als das Objekt hoch, mindestens zwei Bildaufnahmeeinrichtungen auf zwei verschiedenen horizontalen Ebenen angeordnet, wobei die erste horizontale Ebene, die die das Objekt beleuchtende Einrichtung enthalt, zwischen den beiden die Bildaufnahmeeinrichtungen enthaltenen Ebenen angeordnet ist.

Die das Objekt beleuchtende Einrichtung sendet dabei einen Projektionsstrahl aus, der durch mindestens eine innen an dem starren Meßraum angeordnete Strahlumlenkeinrichtung auf annähernd die Höhe des Meßraumes in dem Bereich aufgeweitet wird, in welchem das Objekt in dem Meßraum angeordnet ist. Durch die Faltung der Strahlengänge innerhalb des starren Meßraumes ist der Einsatz von handelsüblichen langbrennweitigen Videoprojektionsobjektiven möglich. Außerdem wird dadurch eine kompakte Bauweise des Meßraumes mit der darin installierten Elektronik erreicht.

In einer Ausgestaltung ist der Projektionsstrahl der das Objekt beleuchtenden Einrichtung in zwei Teilstrahlen aufgeteilt, so daß zwei unabhängige Muster auf das Objekt projiziert werden, wobei jedes Muster von einer anderen Richtung auf das Objekt projiziert wird. Diese Ausführung hat den Vorteil, daß durch den Einsatz von nur einem Projektor gleichzeitig mehrere Seiten und somit in einem Meßvorgang eine größere Oberfläche des Objektes vermessen werden kann.

In einer Weiterbildung steuert die Codiereinrichtung während des Meßvorganges die Projektionspunkte der das Objekt beleuchtenden Einrichtung mit einem Signal an, welches hinsichtlich der vor dem Meßvorgang bestimmten nichtlinearen Intensitäten der das Objekt beleuchtenden Einrichtung und/oder der Bildaufnahmeeinrichtung korrigiert ist, wodurch eine gleichmäßige Ausleuchtung der Oberfläche des Objektes durch das Muster erreicht wird.
Durch die lokale pixelrelevante Ansteuerung der das Objekt beleuchtenden Einrichtung durch die Codiereinrichtung können für jeden Projektionspunkt solche individuellen Beleuchtungsparameter wie Helligkeit und Kontrast eingestellt werden, das alle Projektionspunkte die gleiche Intensität erzeugen, was eine gleichmäßige Ausleuchtung des Meßobjektes zur Folge hat. Dadurch ist es möglich gerätebedingte nichtlineare Intensitäten von der das Objekt beleuchtenden Einrichtung und/oder der Bildaufnahmeeinrichtung zu korrigieren.

Die Verwendung von festen LCD - Streifengittern oder zwei gekreuzten Streifengittern zur Projektion von um 90° gedrehten Streifen entfällt, da aufgrund der lokalen pixelrelevanten Steuerung beliebig vorgebbare Muster erzeugt werden können.

In einer Ausgestaltung projizieren mindestens zwei das Objekt beleuchtende Einrichtungen während einer Messung gleichzeitig das Muster mit je einer anderen Farbe auf das Objekt.
So wird simultan rotes, grünes und/oder blaues Licht auf das Meßobjekt projiziert. Damit können drei verschiedene 3D - Meßkanäle in der Codiereinrichtung realisiert werden, die simultan arbeiten und auch überlappende Meßzonen ausleuchten können.

Jeder Bildpunkt wird somit nicht nur durch seine Lagekoordinaten sondern zusätzlich durch seine Farbe charakterisiert. Dies hat einen höheren Informationsgehalt pro Bildpunkt zur Folge.

Die Eigenfarbe jedes Bildpunktes des Meßobjektes wird bestimmt, indem weißes Licht auf das Meßobjekt projiziert wird.
Im Gegensatz zu auf Laserlicht basierenden Systemen, die wegen einer möglichen Schädigung des Auges nur mit kleinsten Lichtleistungen betrieben werden dürfen, werden Weißlichtlampen eingesetzt, deren Leistung dem jeweiligen Verwendungzweck angepaßt sind.

Bei der Verwendung von einer Schwarz/WeiB - Bildaufnahmeeinrichtung projiziert die das Objekt beleuchtende Einrichtung auf das Objekt nacheinander rotes, grünes und blaues Licht, wobei die Auswerteeinrichtung aus den jeweils für jede Farbe ermittelten Intensitäten der von der Bildaufnahmeeinrichtung aufgenommenen Bildpunkte des Objektes eine Eigenfarbe jedes aufgenommenen Bildpunktes ermittelt.

In einer Weiterbildung wird bei einer Rundumaufnahme des Objektes durch die Auswerteeinrichtung die gemessene Bildpunktwolke mit Hilfe eines 3D-Morphing-Grundmodells des Objektes angepaßt.

Somit werden Abschattungen, die bei der Aufnahme eines komplexen Körpers, wie es beispielsweise der Mensch darstellt, und eine lückenhafte Präsentation der Körperoberfläche zur Folge haben, gefüllt. Das digitale, rundumgeschlossene Oberflächenmodell eines solchen Körpers in Form eines Körpermodells wird auf Grund der tätsächlich gemessenen Punkte verzerrt, so das sich ein den realen Abmessungen entsprechendes, vollständig geschlossenes 3D-vermessenes Objekt ergibt.

Vorteilhafterweise ist die Auswerteeinrichtung meßraumkalibriert, wodurch eine eindeutige Zuordnung der durch die Bildaufnahmeeinrichtung aufgenommenen Bildpunkte zur jeweiligen Raumkoordinate des Meßraumes gegeben ist.

Auf Grund der Kalibrierung des Meßraumes ist eine Verwendung der Einrichtung zur Aufnahme dreidimensionaler Daten eines Objektes in Meßräumen mit variabler Aufstellunggeometrie möglich. Durch den Einsatz von beliebig leistungsstarken Projektoren und Bildaufnahmeeinrichtungen mit Zoomobjektiven sind auf Grund der vorgeschlagenen Meßraumkalibrierung 3D-Aufnahmen in sehr kleinen als auch sehr großen Meßräume einfach durchführbar.
Eine aufwendige Bestimmung von Modellparametern für komplexe Aufnahmesysteme und Anordnungsgeometrien für einen vorgegebenen konkreten Meßfall entfällt.
Eine gerätetechnische Anpassung des Gesamtsystems auf einen vorher fest zu definierenden Meßraum ist nicht notwendig. Die Eigenschaften der Bildaufnahmeeinrichtung bleiben dabei unberücksichtigt.

Die feste Kalibrierung des Meßraumes bei einer Rundumaufnahme eines Objektes verzichtet auf die Vermessung von Rotations-und Translationsachsen des Systems, die bisher notwendig waren, um Teilansichten zu einer Gesamtansicht zusammenzufügen. Dabei entfällt auch die bisher dazu notwendige Transformation der 3D-Datensätze.

Die Erfindung läßt zahlreiche Ausführungsbeispiele zu. Eines davon soll anhand der in der Zeichnung schematisch dargestellten Figuren näher erläutert werden.

Es zeigt
Figur1: Prinzipdarstellung der erfindungsgemäßen Vorrichtung
Figur 2: Einrichtung zur 3D - Rundumaufnahme
Figur 3a: Draufsicht auf Projektorebene
Figur 3b: Draufsicht auf Kameraebene

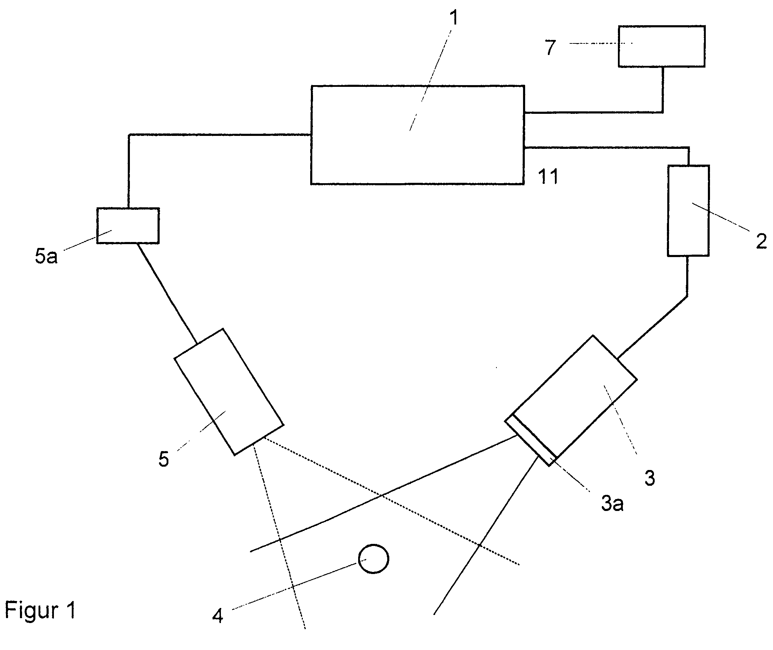

In Figur 1 ist der Prinzipaufbau eines in der Größe skalierbaren Meßsystems zur Gewinnung von 3D-Daten von Objekten mittels digitaler Bildverarbeitung mit Hilfe von Standardkomponenten der PC- und Videotechnik dargestellt.

Ein Computer 1 z.B. ein Personalcomputer oder ein Laptop ist über einen Verstärker mit einer Tiefpaßcharakteristik 2 mit einem LCD-Projektor 3 verbunden, der das zu messende Objekt 4 mit weißem Licht beleuchtet. An Stelle des LCD-Projektors 3 ist auch ein DMD-(Digital-Micromirror-Device) Projektor einsetzbar. Im weiteren soll aber nur der Einsatz eines LCD-Projektors betrachtet werden. Der LCD-Projektor 3 projiziert feinste Bildpunkte (Pixels) in Abhängigkeit einer Codierung auf das zu vermessende Objekt 4. Der LCD-Projektor 3 weist dabei matrixähnlich mindestens 640 Bildpunkte horizontal und mindestens 480 Bildpunkte vertikal auf.

Die elektronische Codierung wird durch den Computer 1 eingestellt und durch den Projektor 3 in optische Helligkeitsunterschiede umgesetzt, mit denen das Objekt 4 beleuchtet wird.
Auf Grund der Einzelpunktansteuerung ist es möglich, jedem Bildpunkt eine andere Helligkeit zuzuordnen.

Zur dreidimensionalen Vermessung des Objektes wird das mit Hilfe des weißes Licht ausstrahlenden LCD-Projektors 3 erzeugte optische Muster von dem Objekt 4 deformiert, was von einer in einem anderen Winkel zum Objekt 4 stehenden Videokamera 5 aufgenommen wird.
Die Videokamera 5 ist über eine Bildspeichereinrichtung 5a mit dem Computer 1 verbunden, der als Codier- und als Auswerteeinrichtung arbeitet. In der Bildspeichereinrichtung 5a werden die Aufnahmen gespeichert. Diese Bildspeichereinrichtung 5a kann aber auch Bestandteil der Videokamera 5 oder des Computers 1 sein.

Der Computer 1 ist weiterhin mit einem Monitor 7 verbunden. Auf diese Weise kann das auszumessende Objekt 4 bei jedem Meßvorgang durch den Bediener der Einrichtung beobachtet werden.

Das verwendete optische Muster hat vorzugsweise eine periodische Struktur. Üblicherweise wird ein Streifenmuster verwendet.
Dabei werden 7 oder 8 verschiedene Graumuster in einer vorgegebenen Frequenz auf das Objekt 4 projiziert. Die so gewonnenen Graubilder werden im Bildspeicher 5a als digitaler Code abgelegt.

Um die Genauigkeit des Meßverfahrens zu verbessern und die Eindeutigkeit der auszuwertenden Bildpunkte zu gewährleisten, wird neben dem eben beschriebenen Gray-Code-Verfahren zusätzlich das Phasenshiftverfahren angewandt. Mit Hilfe dieses Verfahrens wird durch Verschiebung der aufgenommenen Bilder untereinander innerhalb des aufgenommenen Intensitätsmusters der Ort jedes Bildpunktes festgelegt. Die Einzelheiten der verwendeten Meßverfahren sind aus der DE 41 16 445 A1 hinreichend bekannt und müssen deshalb an dieser Stelle nicht näher erläutert werden.

Der mit der Bildspeichereinrichtung 5a verbundene Computer 1 wertet die in der Bildspeichereinrichtung 5a gespeicherten Daten mit Hilfe eines an sich bekannten Triangulationsprinzips aus und errechnet die Tiefendaten des Objektes.

Mit der Ausgabe des Streifenmusters an den Projektor 3 steuert der Computer 1 gleichzeitig die Videokamera 5 an, welche zu diesem Zeitpunkt das Objekt 4 aufnimmt.

Die Projektion des Streifenmusters erfolgt nicht wie nach dem Stand der Technik üblich quer zu den Projektorzeilen , sondern parallel zu diesen.

Um eine möglichst gute Sinusform des Helligkeitssignals quer zur Streifenrichtung (d.h. parallel zur Zeilenrichtung des Projektors 3) zu erzeugen, wird die normale Grauwertdarstellungfähigkeit des LCD-Projektors 3 genutzt.

Der LCD-Projektor 3 wird vom Computer 1 durch das im Computer 1 zur Ansteurung des Monitors 7 vorhandene Video-Grafik-Signal 11 (VGA oder SVGA) über den Verstärker 2 angesteuert. In diesem Verstärker 2, welcher z.B. ein Videosplitter sein kann, wird das VGA-Signal 11 derart unscharf eingestellt, daß ein linearer Zusammenhang zwischen der vom Projektor 3 auf das zu vermessende Objekt 4 projizierten Helligkeit und der von der Videokamera 5 gemessenen Intensität gewährleistet ist.

Diese Verzerrung des VGA-Signals 11, die sich auf Grund von nichtlinearen Intensitäten von Projektor 3 und Kamera 5 notwendig macht, wird in einem Kalibriervorgang vor dem eigentlichen Meßbeginn für jeden Projektionspunkt des Projektors 3 und für jeden Bildpunkt der Videokamera 5 ermittelt. Die so festgestellten Intensitätsunterschiede werden durch den Verstärker 2 in jedem Projektionspunkt korrigiert, so daß die Oberfläche des zu messenden Objektes gleichmäßig ausgeleuchtet ist.

Zur weiteren Verbesserung des sinusförmigen Streifenmusters kann ein handelsüblicher Weichzeichnerfilter (Softener) als Filtervorsatz 3a direkt vor dem Objektiv des Projektors 3 verwendet werden, wodurch ein unscharfes Bild erzeugt wird. Insbesondere bei der Messung von feuchten Oberflächen wird anstelle des Weichzeichnerfilters ein Polarisationsfilter als Vorsatz verwendet.

Um den Informationsgehalt der aufgenommenen Daten zu erhöhen, wird das Objekt 4 nicht mit weißem Licht, sondern nacheinander mit rotem, blauem und grünem Licht angestrahlt. Die Möglichkeit der Ausgabe farbigen Lichtes besteht bei alle LCD-Projektoren. Die Überlagerung dieser verschiedenfarbigen Aufnahmen führt zu einer besseren Darstellung und Auswertung des zu vermessenden Objektes.

Eine solche kleine, leistungsstarke und kompakte optische Meßeinheit unter Verwendung der digitalen Bildverarbeitung berechnet die gewünschten Geometrieinformationen in kürzester Zeit.

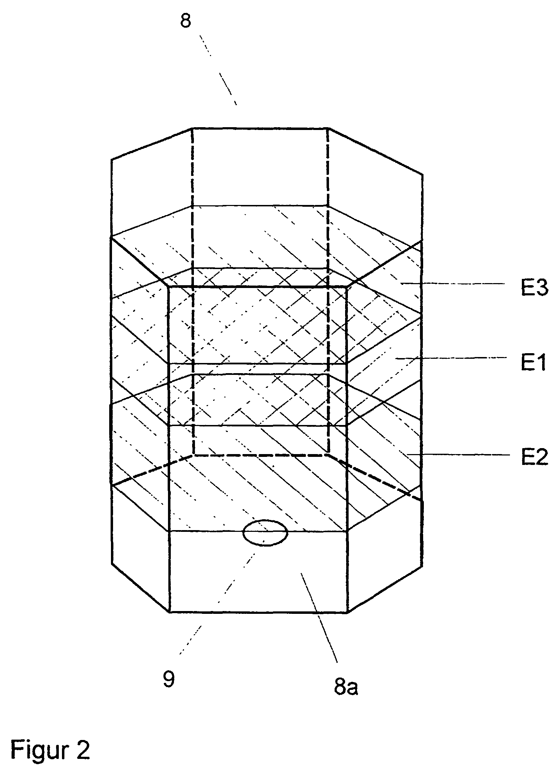

In Figur 2 ist eine Einrichtung zur Rundumaufnahme eines Objektes dargestellt, welche insbesondere für die Aufnahme eines Menschen geeignet ist.

Die Einrichtung besteht aus einem abgeschlossenen, starren Meßraum 8, welcher einfach aus einem Aluminium-Stecksystem herstellbar ist. Der Meßraum 8 hat eine achteckige Grundfläche 8a, in deren Zentrum 9 der Mensch als Meßobjekt 4 Aufstellung nimmt.

Der Meßraum 8 hat eine Höhe von annähernd 2 m und weist parallel zur Grundfläche 8a eine Projektorebene E1 und zwei Kameraebenen E2, E3 auf. Die Projektorebene E1 ist zwischen den beiden Kameraebenen E2, E3 angeordnet, etwa in der halben Höhe des Meßraumes 8.

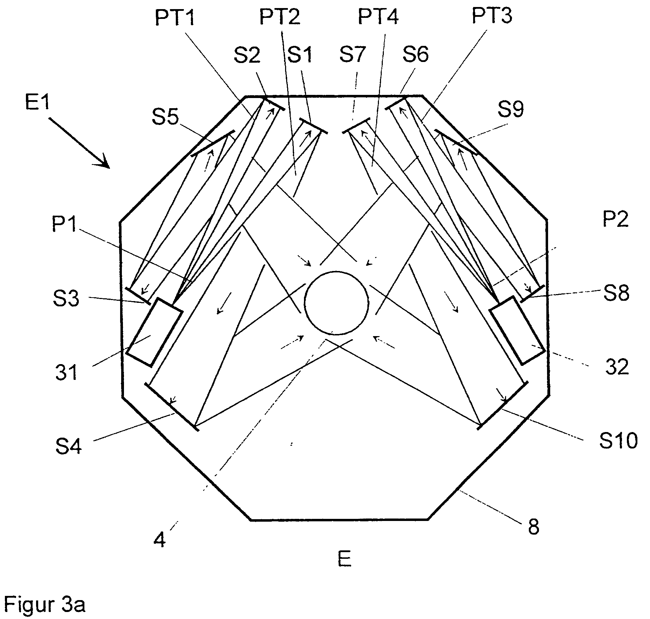

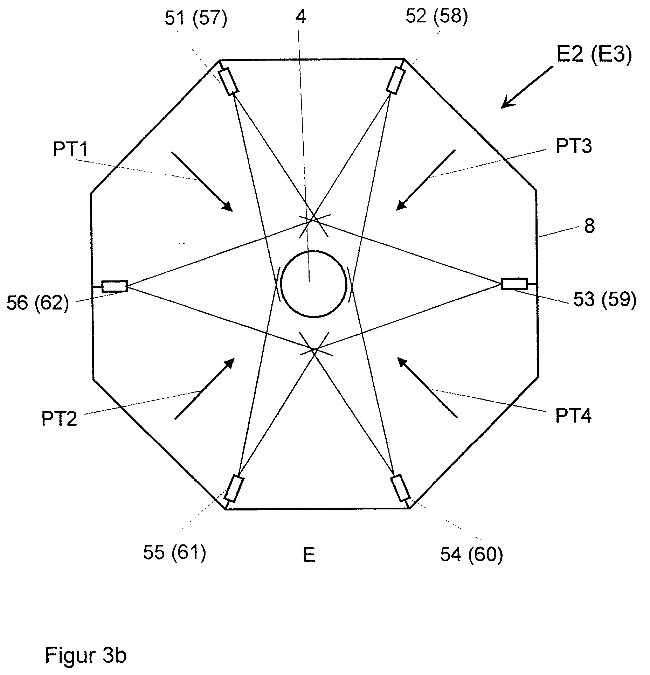

Die Anordnung der Projektoren und Kameras soll anhand der Figuren 3a und 3b erläutert werden.

Gemäß Figur 3a sind in der Projektorebene E1 zwei LCD-Projektoren 31 und 32 angeordnet.

Unterhalb der Projektoren 31,32 sind in der ersten KameraEbene E2 , die sich ungefähr auf halber Strecke zwischen Grundfläche 8a des Meßraumes 8 und der Projektorebene E1 erstreckt, um den Umfang des Meßraumes 8 mindestens vier, im hier beschriebenen konkreten Anwendungsfall sechs Video-Kameras 51 bis 56 verteilt. (Figur 3b).
In der zweiten Kamera-Ebene E3, die sich oberhalb der Projektor-Ebene E1 erstreckt, sind ebenfalls sechs Videokameras 57 bis 62 über den Innenraumumfang des Meßraumes 8 verteilt. Auch hier würden vier Videokameras zur Rundumaufnahme des Meßobjektes ausreichen.
Da die Kameras in den Kamera-Ebenen E2 und E3 identisch angeordnet sind, ist in Figur 3b die Kamera-Ebene E2 dargestellt, während die Elemente der Kamera-Ebene E3 in Klammern gekennzeichnet sind.

In der Projektor-Ebene E1 sind dem Projektor 31 gegenüberliegend zwei Spiegel S1, S2 angeordnet, die den Projektorstrahl P1 in zwei Hälften aufteilen. Die so erzeugten zwei Projektorteilstrahlen PT1, PT2 werden von den Spiegeln S1, S2 auf weitere Spiegel in der Ebene oder räumlich umgelenkt, um so eine Aufweitung jedes Projektorteilstrahles PT1, PT2 auf die Höhe des Meßraumes 8 zu erreichen. (Figur 3a)

Der durch den Spiegel S1 erzeugte Projektorteilstrahl PT2 fällt auf einen weiteren Spiegel S4 und wird von diesem direkt auf das Meßobjekt 4 gelenkt.

Der zweite durch den Spiegel S2 erzeugte Projektorteilstrahl PT1 des Projektors 31 wird vom Spiegel S3 weiter auf einen nächsten Spiegel S5 reflektiert. Erst dieser dreifachgefaltete Projektorteilstrahl PT1 beleuchtet das Meßobjekt 4.

Der zum ersten Projektor 31 spiegelsymmetrisch angeordnete zweite Projektor 32 gibt ebenfalls einen Projektorstrahl P2 ab, der analog zu der eben beschriebenen Art und Weise von zwei weiteren Spiegeln S6,S7 ebenfalls in zwei Projektorteilstrahlen PT3, PT4 aufgeteilt wird. Wie eben beschriebenen wird auch hier der durch den Spiegel S6 erzeugte Projektorteilstrahl PT3 des Projektors 32 auf den Spiegel S8 gelenkt. Dieser leitet den Projektorteilstrahl PT3 auf Spiegel S9 um, welcher den Strahl auf das Meßobjekt 4 projiziert.

Der durch den Spiegel S7 erzeugte Teilstrahl PT4 des Projektors 32 wird von einem weiteren Spiegel S10 auf das Meßobjekt 4 gelenkt.

Die Spiegel S3, S4 bzw. S8, S10 sind jeweils um die Projektoren 31 bzw. 32 angeordnet, so daß sie diesen einschließen.

Die Dimensionierung der Spiegelflächen der Spiegel S1 bis S10 ist dabei so gewählt, daß von jedem Spiegel der gesamte umgelenkte Strahl erfaßt wird, damit ein vollständiges Grau - Code- Muster auf das Meßobjekt 4 übertragen wird.

Die Umlenkung der Projektorteilstrahlen PT1...PT4 der Projektoren 31 und 32 erfolgt so, daß jeder Teilstrahl PT1...PT4 das Meßobjekt 4 von einer anderen Seite beleuchtet, so daß mit Hilfe von nur zwei Projektoren 31, 32 eine durchgängige Beleuchtung des Meßobjektes 4 möglich wird. Die Projektorteilstrahlen PT1...PT4 beider Projektoren 31 und 32 treffen in Winkelabständen von 90° auf das Meßobjekt 4. Bei einer richtigen Strahlaufweitung kann somit das Meßobjekt 4 rundherum ganzflächig beleuchtet werden.

Die Kameras 51...56;57...62 jeder Kameraebene E2, E3 sind so angeordnet, daß der Mensch als Meßobjekt 4 mit seiner Brust- und Rückenseite vollständig von je einer Kamera aufgenommen wird. Gemäß Figur 3b nimmt die Kamera 56 die gesamte Breite der Brustseite des Menschen auf, während die Kamera 53 vollständig die Breite der Rückenpartie fotografiert. Beidseitig sind zur Kamera 56 in einem Winkelabstand von ca. 60° weitere Kameras 51,55 angeordnet, die aus ihrem Winkel jeweils die Hälfte der Brustseite aufnehmen. Analog dazu nehmen zwei weitere Kameras 52, 54 , die symmetrisch zur Kamera 53 angeordnet sind, je eine Hälfte der Rückenseite des Menschen auf.

Während die Projektoren 31, 32 das gesamte Meßobjekt 4 rundherum beleuchten, nehmen die in einer Kameraebene E2 bzw. E3 aufgestellten Kameras nur die jeweils halbe Höhe des Meßobjektes 4 auf. Die Kameras 51 bis 56 der unteren Kamera-Ebene E2 fotografieren das Meßobjekt 4 von der Grundfläche 8a bis in Höhe der Projektorebene E1, während die Kameras 57 bis 62 der Kamera-Ebene E3 das Meßobjekt 4 von der Projektorebene E1 bis Meßraumhöhe aufnehmen.

Die Kameras sind dabei so angeordnet, daß immer zwei Kameras zur Aufnahme eines Teiles des von einem Projektorstrahl beleuchteten Objektes 4 herangezogen werden.

Die erläuterte Anordnung und Anzahl der Projektoren und Kameras ist vorteilhaft für die Rundherumaufnahme eines Menschen.
Für andere Meßobjekte kann eine andere Anzahl von Projektoren und Kameras sinnvoll sein.

Um die beschriebene Meßkabine 8 unabhängig von den Kameraeigenschaften betreiben zu können, wird einmalig nach der Errichtung eine Kalibrierung der Meßkabine vorgenommen. Dies erfolgt, um eine eindeutige Zuordnung der von den einzelnen Kameras aufgenommenen Bildpunkten zu Raumpunkten der Meßkabine zu erhalten.

Zu diesem Zweck wird ein ebenes Referenzobjekt, das senkrecht zur Grundfläche 8a steht, parallel in der Meßkabine 8 verschoben. Bei jeder Stellung wird das Referenzobjektes vermessen und die Daten abgespeichert. Die von dem Referenzobjekt aufgenommenen Positionen sind so gewählt, das annähernd der gesamte Meßraum 8 auf diese Weise indirekt ausgemessen wird.

Nach Abschluß des Kalibriervorganges ist im Computer 1 abgespeichert, welcher Bildpunkt welcher Kamera welche Raumkoordinate des Meßraumes 8 erfaßt. Durch Interpolation sind die nichterfaßten Raumkoordinaten leicht bestimmbar. In der sich anschließenden Messung ist aufgrund dieser Eichung eine schnelle und zuverlässige Bestimmung der 3D - Daten eines Objektes möglich. Diese Kalibrierung des Meßraumes ist absolut und fest.

Auf Grund dieser Kalibrierung haben Unebenheiten der Spiegel keinen Einfluß auf das Meßergebnis.
Um nie ganz zu vermeidende Abschattungen des menschlichen Körpers zu korrigieren, werden die gemessenen Punkte durch Anpassung eines Menschmodells an die Punktwolke geschlossen, wodurch ein vollständiges Meßergebnis erlangt wird.

## Patentansprüche

1. Vorrichtung zur Bestimmung von dreidimensionalen Daten von Objekten , bei welcher eine Codiereinrichtung eine das Objekt beleuchtende Einrichtung ansteuert, die ein der Codierung entsprechendes optischen Muster auf das Objekt projiziert, wobei eine Bildaufnahmeeinrichtung das mit dem Muster beleuchtete Objekt aufnimmt und eine Auswerteeinrichtung die von der Bildaufnahmeeinrichtung aufgenommenen Bildpunkte durch ein aktives Triangulationsprinzip in eine dreidimensionale Darstellung des Objektes umsetzt, dadurch gekennzeichnet, daß die das Objekt beleuchtende Einrichtung (3) eine Vielzahl einzeln ansteuerbarer Projektionspunkte aufweist, die von der Codiereinrichtung (1) einzeln angesteuert werden, wodurch die angesteuerten Projektionspunkte auf dem Objekt (4) das optische Muster erzeugen.

2. Vorrichtung nach Anspruch 1 dadurch gekennzeichnet, daß das von der Codiereinrichtung (1) erzeugte Muster parallel zu den von der das Objekt beleuchtenden Einrichtung (4) ausgegebenen Zeilen erzeugt wird.

3. Vorrichtung nach Anspruch 1 oder 2 dadurch gekennzeichnet, daß die Codiereinrichtung (1) die das Objekt beleuchtende Einrichtung (3) über einen Verstärker mit Filtercharakteristik (2) ansteuert.

4. Vorrichtung nach Anspruch 3 dadurch gekennzeichnet, daß die Codiereinrichtung (1) ein Computer ist, dessen zur Ansteuerung eines Monitors vorgesehenes Bildausgabesignal (11) zu einer der von ihm erzeugten Codierung entsprechenden Ansteuerung der Projektionspunkte der das Objekt beleuchtenden Einrichtung (3) genutzt wird.

5. Vorrichtung nach Anspruch 4 dadurch gekennzeichnet, daß parallel zu der das Objekt beleuchtenden Einrichtung (3) eine Anzeigeeinheit (7) zur Beobachtung des Objektes (4) ansteuerbar ist.

6. Vorrichtung nach einem der Ansprüche 1 bis 5 dadurch gekennzeichnet, daß die das Objekt beleuchtende Einrichtung (3) und die Bildaufnahmeeinrichtung (5) annähernd in einer Ebene angeordnet sind.

7. Vorrichtung nach einem der Ansprüche 1 bis 5 dadurch gekennzeichnet, daß die das Objekt beleuchtende Einrichtung (3), die Bildaufnahmeeinrichtung (5) sowie das Objekt (4) in einem starren Meßraum (8) angeordnet sind.

8. Vorrichtung nach Anspruch 7 dadurch gekennzeichnet, daß die das Objekt beleuchtende Einrichtung (3) auf einer ersten horizontalen Ebene (E1) und die Bildaufnahmeeinrichtung (5) auf einer zweiten horizontalen Ebene (E2) angeordnet ist.

9. Vorrichtung nach Anspruch 8 dadurch gekennzeichnet, daß mindestens zwei Bildaufnahmeeinrichtungen (5) auf zwei verschiedenen horizontalen Ebenen (E2, E3) angeordnet sind, wobei die erste die das Objekt beleuchtende Einrichtung (3) enthaltende horizontale Ebene (E1) zwischen den beiden die Bildaufnahmeeinrichtungen (5) enthaltenen Ebenen (E2,E3) angeordnet ist.

10. Vorrichtung nach Anspruch 9 dadurch gekennzeichnet, daß die das Objekt beleuchtende Einrichtung (3) einen Projektionsstrahl (P1;P2) aussendet, der durch mindestens eine innen an dem starren Meßraum (8) angeordnete Strahlumlenkeinrichtung (S1-S10) auf annähernd die Höhe des Meßraumes (8) in dem Bereich aufgeweitet wird, in welchem das Objekt (4) in dem Meßraum (8) angeordnet ist.

11. Vorrichtung nach Anspruch 10 dadurch gekennzeichnet, daß der Projektionsstrahl (P1;P2) der das Objekt beleuchtenden Einrichtung (3) in zwei Teilstrahlen (PT1,PT2; PT3,PT4) aufgeteilt ist, so daß das Muster gleichzeitig mehrfach auf das Objekt (4) jeweils aus einer anderen Richtung projiziert wird.

12. Vorrichtung nach Anspruch 1 bis 4 dadurch gekennzeichnet, daß die Codiereinrichtung (1) während des Meßvorganges die Projektionspunkte der das Objekt beleuchtenden Einrichtung (3) mit einem Signal ansteuert, welches hinsichtlich der vor dem Meßvorgang bestimmten nichtlinearen Intensitäten der das Objekt beleuchtenden Einrichtung (3) und /oder der Bildaufnahmeeinrichtung (5) korrigiert ist, wodurch eine gleichmäßige Ausleuchtung der Oberfläche des Objektes (4) durch das Muster erreicht wird.

13. Vorrichtung nach Anspruch 8 oder 9 dadurch gekennzeichnet, daß mindestens zwei das Objekt beleuchtende Einrichtungen (31, 32) während einer Messung gleichzeitig das Muster mit je einer anderen Farbe auf das Objekt (4) projizieren.

14. Vorrichtung nach Anspruch 8 oder 9 dadurch gekennzeichnet, daß weißes Licht auf das Objekt (4) projiziert wird, wobei die Farbe eines jeden aufgenommenen Bildpunktes mit einer Farbbildaufnahmeeinrichtung (5) bestimmt wird

15. Vorrichtung nach Anspruch 8 oder 9 dadurch gekennzeichnet, daß bei Verwendung einer Schwarz/Weiß- Bildaufnahmeeinrichtung (5) die das Objekt beleuchtende Einrichtung (3) auf das Objekt (4) nacheinander rotes, blaues und grünes Licht projiziert , wobei die Auswerteeinrichtung (1) aus den jeweils für jede Farbe ermittelten Intensitäten der von der Bildaufnahmeeinrichtung (5) aufgenommenen Bildpunkten des Objektes (4) eine Eigenfarbe jedes aufgenommenen Bildpunktes ermittelt.

16. Vorrichtung nach Anspruch 1 dadurch gekennzeichnet, daß bei einer Rundumaufnahme des Objektes (4) die Auswerteeinrichtung (1) die gemessene Bildpunktwolke mit Hilfe eines 3D- Morphing - Grundmodells des Objektes (4) anpaßt.

17. Vorrichtung nach Anspruch 1 dadurch gekennzeichnet, daß die Auswerteeinrichtung (1) meßraumkalibriert ist, wodurch eine eindeutige Zuordnung der durch die Bildaufnahmeeinrichtung (5) aufgenommenen Bildpunkte zur jeweiligen Raumkoordinaten des Meßraumes (8) gegeben ist.
